# EUROPEAN PATENT APPLICATION

(11) **EP 4 770 044 A1**
(43) Date of publication of application: **01.07.2026**
(21) Application number: 24910126.2
(22) Date of filing: 10.10.2024
(51) Int. Cl.: H04L 51/224

(54) **NOTIFICATION SYNCHRONIZATION METHOD AND ELECTRONIC DEVICE**

(30) Priority: 27.12.2023 CN 202311836023
(71) Applicant: HUAWEI TECHNOLOGIES CO., LTD., Shenzhen, Guangdong 518129 (CN)
(72) Inventor: CHEN, Li, Shenzhen, Guangdong 518129 (CN)
(74) Representative: Thun, Clemens
(86) International application number: PCT/CN2024/123834
(87) International publication number: WO 2025/139184

(57) **Abstract**

Embodiments of this application provide a notification synchronization method and an electronic device. In the method, after receiving, from a push server, a first notification and a device identifier list including a device identifier of one or more electronic devices, a first electronic device determines, based on whether the device identifier list includes a device identifier of a second electronic device located in same networking as the first electronic device, whether to synchronize the first notification to the second electronic device. Specifically, if the device identifier of the second electronic device is not included, the first notification is synchronized to the second electronic device; and if the device identifier of the second electronic device is included, the first notification is not synchronized to the second electronic device. The first notification is a notification that is of the first application and that corresponds to a first account. The first application is logged in on the one or more electronic devices and the first electronic device by using the first account. According to the method and the electronic device, after receiving a notification message, the electronic device can determine, based on a device identifier list carried in the notification message, which device to which the notification message is sent, and can avoid forwarding the notification message to another device that has ever received the notification message. This avoids a repeated reminder of the message.

## Description

This application claims priority to Chinese Patent Application No. 202311836023.1, filed with the China National Intellectual Property Administration on December 27, 2023 and entitled "NOTIFICATION SYNCHRONIZATION METHOD AND ELECTRONIC DEVICE", which is incorporated herein by reference in its entirety.

### TECHNICAL FIELD

Embodiments of this application relate to the field of notification synchronization, and more specifically, to a notification synchronization method and an electronic device.

### BACKGROUND

A message notification function of an electronic device is intended to remind a user of communication information from another person or other real-time information in an application. The user may tap a notification displayed on a screen of the electronic device to start the application, or directly perform a related operation on the notification.

For a single-device notification scenario, a notification is mainly pushed by a cloud or locally sent by an application. For a cross-device notification scenario, a notification synchronization policy between devices depends on customized scenarios such as a scenario of notification synchronization between a mobile phone and a watch, a scenario of notification synchronization between a mobile phone and an earphone, and a multi-screen collaboration scenario. In a current notification synchronization method, a notification management rule is monotonous, there is no effective management and control mechanism for notification presentation and reminding, and notifications are numerous and disordered. This easily results in a repeated reminder of a notification message, which affects user experience.

### SUMMARY

This application provides a notification synchronization method and an electronic device. According to the method and the electronic device, after receiving a notification message, the electronic device can determine, based on a device identifier list carried in the notification message, which device to which the notification message is sent, and the electronic device can avoid forwarding the notification message to another device that has ever received the notification message. This avoids inconvenience caused to a user due to a repeated reminder of the message notification.

According to a first aspect, a notification synchronization method is provided. The method includes: A first electronic device receives a first notification and a device identifier list that are sent by a push server, where a first application is logged in on the first electronic device by using a first account, the device identifier list includes a device identifier of one or more electronic devices, the first application is logged in on the one or more electronic devices by using the first account, and the first notification is a notification that is of the first application and that corresponds to the first account; and when the device identifier list does not include a device identifier of a second electronic device, the first electronic device synchronizes the first notification to the second electronic device; or when the device identifier list includes the device identifier of the second electronic device, the first electronic device does not synchronize the first notification to the second electronic device, where the second electronic device and the first electronic device are located in same networking.

The first notification and the device identifier list that are received by the first electronic device are sent by the push server based on a device identifier of the first electronic device.

Optionally, the push server may also be referred to as a push cloud.

In this embodiment of this application, the push server separately delivers a notification message to all corresponding devices in the device identifier list. The notification message delivered by the push server to the electronic device carries the device identifier list. In this way, after receiving the notification message, the electronic device can determine, based on the device identifier list, which device to which the notification message is sent, and the electronic device can avoid repeatedly forwarding the notification message to another device that has ever received the notification message. This avoids inconvenience caused to a user due to repeated sending of the message notification.

With reference to the first aspect, in a possible implementation, the device identifier list includes a device identifier of the first electronic device.

In another embodiment, the device identifier list does not include the device identifier of the first electronic device.

In this embodiment of this application, the device identifier list sent by the push server to an electronic device includes a device identifier list of the electronic device. In other words, the push server may directly forward the received device identifier list to the electronic device, without editing the device identifier list. For example, the device identifier of the electronic device does not need to be intentionally deleted from the device identifier list. In this way, an operation of the push server can be simplified, and implementability is stronger.

With reference to the first aspect, in a possible implementation, that the first electronic device synchronizes the first notification to the second electronic device includes: The first electronic device synchronizes the first notification to a database of the second electronic device through a database of the first electronic device.

In an implementation, the database of the first electronic device is synchronized with the database of the second electronic device across devices. When a database of one of the electronic devices is updated, a database of the other electronic device that is synchronized with the database of the electronic device across ends is synchronously updated.

Optionally, the update of the database may include addition of a notification message, may further include a status update of a notification message, for example, a reading status of the notification message, and may further include a status update of an electronic device, for example, an unlocked state, a lock screen state, or a screen-off state.

In this embodiment of this application, between a plurality of electronic devices located in same networking, a notification message, a status (such as a reading status) of the notification message, and a status (such as an unlocked state) of the electronic device can be synchronized across ends through a database. This better implements collaborative message reminding between the plurality of electronic devices. For example, when a notification is read on a device at one end, the notification displayed on the device at the other end synchronously disappears.

With reference to the first aspect, in a possible implementation, the method further includes: The first electronic device determines whether the first notification has ever been received; and if the first electronic device determines that the first notification has not been received, the first electronic device sends a reminder of the first notification to a user.

It may be understood that a plurality of electronic devices may receive a same message notification for a plurality of times because of a message receiving and sending delay, or because the plurality of electronic devices are not in same networking.

In this embodiment of this application, when receiving the notification message, the electronic device may determine whether the notification message has ever been received. When the notification message has ever been received, a reminder of the notification message is not sent to the user. This further avoids a repeated reminder of the notification message, and improves user experience.

With reference to the first aspect, in a possible implementation, before the first electronic device sends the reminder of the first notification to the user, the method further includes: The first electronic device determines a reminder manner of the first notification based on a status of the first electronic device.

In an example, when the status of the first electronic device is an unlocked state, the first electronic device may send the reminder of the first notification through a pop-up window, a ringtone, vibration, or the like; and when the status of the first electronic device is a screen lock state, the first electronic device gives a silent reminder of the first notification.

In this embodiment of this application, when a plurality of electronic devices in the networking collaborate to remind a notification message, the reminder manner may be determined based on a current state of the electronic device. In this way, when the user is using one of the electronic devices, the electronic device that is being used provides an explicit reminder, so that the user can accurately receive the reminder of the notification message.

With reference to the first aspect, in a possible implementation, before the first electronic device receives the first notification and the device identifier list that are sent by the push server, the method further includes: The first electronic device sends the device identifier of the first electronic device to an application server of the first application, to enable the application server of the first application to send the first notification and the device identifier of the first electronic device to the push server when generating the first notification.

In an example, when the first electronic device is powered on for the first time, the first electronic device registers the device identifier of the first electronic device with the push server. Based on this, when the first application installed on the first electronic device is logged in on the first electronic device for the first time by using the first account, the first electronic device sends the device identifier of the first electronic device to the application server of the first application, to notify the server of the first application that a device identifier of an electronic device on which the first application is logged in by using the first account is the device identifier of the first electronic device. Similarly, if a user's account corresponding to the first application on the first electronic device is switched from the first account to a second account, the first electronic device resends the device identifier of the first electronic device to the application server of the first application.

In this embodiment of this application, an electronic device can send a device identifier of the electronic device to the application server. In this way, after receiving a notification message of the application, the application server can send the received device identifier list and the notification message together to the push server, and the push server further pushes the device identifier list and the notification message to the electronic device.

With reference to the first aspect, in a possible implementation, before the first electronic device sends the device identifier of the first electronic device to the application server of the first application, the method further includes: The first electronic device sends a first request message to the push server, where the first request message is used to request to register the device identifier of the first electronic device; and the first electronic device receives the device identifier of the first electronic device sent by the push server.

In this embodiment of this application, an electronic device can register a device identifier of the electronic device with the push server, and send the device identifier to the application server. In this way, after generating a notification message of the application, the application server can send the received device identifier list and the notification message together to the push server, and the push server further pushes the device identifier list and the notification message to an electronic device in the device identifier list. This allows the electronic device to determine, based on the device identifier list, which device to which the notification message is sent, which provides a basis of whether the electronic device synchronizes the message notification to another device.

With reference to the first aspect, in a possible implementation, after the first electronic device synchronizes the first notification to the second electronic device, the method further includes: When a status of the first notification changes, the first electronic device synchronizes the status of the first notification to the second electronic device.

The status of the first notification may include a receiving status of the notification message, a reading status of the notification message, an update status of the notification message, a status of an electronic device that receives the notification message, or the like.

In this embodiment of this application, between a plurality of electronic devices located in same networking, a notification message, a status (such as a reading status) of the notification message, and a status (such as an unlocked state) of the electronic device can be synchronized across ends. This better implements collaborative message reminding between the plurality of electronic devices. For example, when a notification is read on a device at one end, the notification displayed on the device at the other end synchronously disappears.

With reference to the first aspect, in a possible implementation, that the first electronic device synchronizes the status of the first notification to the second electronic device includes: The first electronic device updates the status of the first notification to the database of the first electronic device, the database of the first electronic device is synchronized with the database of the second electronic device across ends.

In some embodiments, when the status of the first electronic device changes, the first electronic device updates the status of the first electronic device to the database of the first electronic device.

In some embodiments, when the first electronic device receives the first notification, the first electronic device updates the first notification to the database of the first electronic device.

In this embodiment of this application, between a plurality of electronic devices located in same networking, a notification message, a status (such as a reading status) of the notification message, and a status (such as an unlocked state) of the electronic device can be synchronized across ends through a database. This better implements collaborative message reminding between the plurality of electronic devices. For example, when a notification is read on a device at one end, the notification displayed on the device at the other end synchronously disappears.

According to a second aspect, a notification synchronization method is provided. The method includes: A push server receives a first notification and a device identifier list that are sent by an application server of a first application, where the device identifier list includes a device identifier of one or more electronic devices on which the first application is logged in by using a first account, the device identifier list includes a device identifier of a first electronic device, and the first notification is a notification that is of the first application and that corresponds to the first account; and the push server sends the first notification and a first device identifier list to the first electronic device based on the device identifier of the first electronic device, where the first device identifier list is the same as the device identifier list, or the first device identifier list includes all device identifiers in the device identifier list except the device identifier of the first electronic device.

In this embodiment of this application, the push server separately delivers a notification message to corresponding devices in the device identifier list. The notification message delivered by the push server to the electronic device carries the device identifier list. In this way, after receiving the notification message, the electronic device can determine, based on the device identifier list, which device to which the notification message is sent, and the electronic device can avoid repeatedly forwarding the notification message to another device that has ever received the notification message. This avoids inconvenience caused to a user due to repeated sending of the message notification.

With reference to the second aspect, in a possible implementation, when the device identifier list includes a device identifier of a second electronic device, the method further includes: The push server sends the first notification and a second device identifier list to the second electronic device based on the device identifier of the second electronic device, where the second device identifier list is the same as the device identifier list, or the second device identifier list includes all device identifiers in the device identifier list except the device identifier of the second electronic device.

In this embodiment of this application, the push server separately delivers a notification message to all corresponding devices in the device identifier list. The notification message delivered by the push server to the electronic device carries the device identifier list. In this way, after receiving the notification message, the electronic device can determine, based on the device identifier list, which device to which the notification message is sent, and the electronic device can avoid repeatedly forwarding the notification message to another device that has ever received the notification message. This avoids inconvenience caused to a user due to repeated sending of the message notification.

With reference to the second aspect, in a possible implementation, before the push server receives the first notification and the device identifier list that are sent by the application server of the first application, the method further includes: The push server receives a first request message sent by the first electronic device, where the first request message is used to request to register the device identifier of the first electronic device; and the push server sends the device identifier of the first electronic device to the first electronic device, to enable the first electronic device to send the device identifier of the first electronic device to the application server of the first application, and further enable the application server of the first application to send the first notification and the device identifier of the first electronic device to the push server when generating the first notification.

In this embodiment of this application, the push server can register a device identifier of an electronic device based on a registration request of the electronic device, and send the device identifier of the electronic device to the electronic device, so that after the device identifier of the electronic device is obtained, the electronic device can send the device identifier to the application server. In this way, after generating a notification message of the application, the application server can send the received device identifier list and the notification message together to the push server, and the push server further pushes the device identifier list and the notification message to an electronic device in the device identifier list. This allows the electronic device to determine, based on the device identifier list, which device to which the notification message is sent, which provides a basis of whether the electronic device synchronizes the message notification to another device.

With reference to the second aspect, in a possible implementation, a notification synchronization rule is preset in the push server, and the notification synchronization rule is used by an electronic device in the networking to perform notification synchronization.

In some embodiments, the notification synchronization rule may be, for example, determined based on a type of the electronic device in the networking. For example, when the electronic device is a watch, the notification is synchronized to the watch only after a user enables notification synchronization authorization for the watch in a related application on an electronic device end that receives the notification message. For another example, when the electronic device is a PC, the notification is synchronized to the PC only when the PC and the electronic device that receives the notification message are in a collaboration state.

In this embodiment of this application, a unified notification synchronization policy for device-cloud collaboration and device-device collaboration is provided. Notification synchronization is performed between all electronic devices in same networking based on the notification synchronization rule preset in the push server. In this way, notification synchronization between a plurality of electronic devices does not depend on customized scenarios, but is applicable to a unified notification synchronization policy, which improves convenience of notification synchronization.

According to a third aspect, a notification synchronization method is provided. The method includes: After generating a first notification, an application server of a first application sends the first notification and a device identifier list to a push server, where the device identifier list includes a device identifier of one or more electronic devices on which the first application is logged in by using a first account, the device identifier list is used by the push server to send the first notification and the device identifier list to the one or more electronic devices, and the first notification is a notification that is of the first application and that corresponds to the first account.

In some embodiments, the device identifier list sent by the push server to a target electronic device may be the same as the received device identifier list, or may be a device identifier list obtained after a device identifier of the target electronic device in the received device identifier list is deleted.

In this embodiment of this application, a notification message delivered by the application server carries the device identifier list. The push server can separately deliver the notification message to all corresponding devices in the device identifier list. The notification message delivered by the push server to the electronic device also carries the device identifier list. In this way, after receiving the notification message, the electronic device can determine, based on the device identifier list, which device to which the notification message is sent, and the electronic device can avoid repeatedly forwarding the notification message to another device that has ever received the notification message. This avoids inconvenience caused to a user due to repeated sending of the message notification.

With reference to the third aspect, in a possible implementation, when the device identifier list includes a device identifier of a first electronic device, before the first notification and the device identifier list are sent to the push server, the method further includes: The application server of the first application receives the device identifier of the first electronic device sent by the first electronic device.

In some embodiments, when the first application is logged in on the first electronic device for the first time by using the first account, the application server of the first application receives the device identifier of the first electronic device sent by the first electronic device.

In this embodiment of this application, an electronic device can send a device identifier of the electronic device to the application server. In this way, after generating a notification message, the application server can deliver the received device identifier and the notification message together by using the push server. This allows the electronic device to determine, based on the device identifier and the notification message, which device to which the notification message is sent, which provides a basis of whether the electronic device synchronizes the message notification to another device.

With reference to the third aspect, in a possible implementation, when the device identifier list includes a device identifier of a second electronic device, before the first notification and the device identifier list are sent to the push server, the method further includes: The application server of the first application receives the device identifier of the second electronic device sent by the second electronic device.

In some embodiments, when the first application is logged in on the second electronic device for the first time by using the first account, the application server of the first application receives the device identifier of the second electronic device sent by the second electronic device.

In this embodiment of this application, an electronic device can send a device identifier of the electronic device to the application server. In this way, after generating a notification message, the application server can separately deliver a device identifier list formed by the received device identifier and the notification message together to all devices in the device identifier list by using the push server. This allows the electronic device to determine, based on the device identifier list and the notification message, which device to which the notification message is sent, which provides a basis of whether the electronic device synchronizes the message notification to another device.

According to a fourth aspect, an electronic device is provided. The electronic device includes a memory and a processor. The memory is configured to store computer program code, and the processor is configured to execute the computer program code stored in the memory, to implement the method according to the first aspect or any possible implementation of the first aspect, or implement the method according to the second aspect or any possible implementation of the second aspect, or implement the method according to the third aspect or any possible implementation of the third aspect.

According to a fifth aspect, a system is provided. The system includes one or more first electronic devices, a push server, and an application server. The first electronic device is configured to perform the method according to the first aspect or any possible implementation of the first aspect, the push server is configured to perform the method according to the second aspect or any possible implementation of the second aspect, and the application server is configured to perform the method according to the third aspect or any possible implementation of the third aspect.

According to a sixth aspect, a computer-readable storage medium is provided. The computer-readable storage medium stores a computer program or instructions. When the computer program or the instructions are executed, the method according to the first aspect or any possible implementation of the first aspect is implemented, or the method according to the second aspect or any possible implementation of the second aspect is implemented, or the method according to the third aspect or any possible implementation of the third aspect is implemented.

According to a seventh aspect, a chip is provided, which stores instructions. When the instructions are run on a device, the chip is enabled to perform the method according to the first aspect or any possible implementation of the first aspect, or perform the method according to the second aspect or any possible implementation of the second aspect, or perform the method according to the third aspect or any possible implementation of the third aspect.

According to an eighth aspect, a computer program product is provided. The computer program product stores a computer program or instructions. When the computer program or the instructions are executed, the method according to the first aspect or any possible implementation of the first aspect is implemented, or the method according to the second aspect or any possible implementation of the second aspect is implemented, or the method according to the third aspect or any possible implementation of the third aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3(a), FIG. 3(b), and FIG. 3(c) are a diagram of notification synchronization corresponding to a scenario of notification synchronization between a mobile phone and a watch;
FIG. 4(a), FIG. 4(b), and FIG. 4(c) are a diagram of notification synchronization corresponding to a scenario of notification synchronization between a mobile phone and a cockpit;
FIG. 5(a), FIG. 5(b), and FIG. 5(c) are a diagram of notification synchronization corresponding to a scenario of notification synchronization between a mobile phone and a tablet computer;
FIG. 6 is a diagram of notification synchronization corresponding to a scenario of notification synchronization between a mobile phone and an earphone;
FIG. 7 is a diagram of a scenario according to an embodiment of this application;
FIG. 8 is a diagram representing a notification message sending path according to an embodiment of this application;
FIG. 9 is a diagram of a cross-device notification subscription method according to an embodiment of this application;
FIG. 10 is a diagram of a system architecture of notification synchronization according to an embodiment of this application;
FIG. 11 is a schematic flowchart of a notification synchronization method according to an embodiment of this application;
FIG. 12 is a schematic flowchart of another notification synchronization method according to an embodiment of this application;
FIG. 13 is a schematic flowchart of another notification synchronization method according to an embodiment of this application;
FIG. 14A and FIG. 14B are a schematic flowchart of another notification synchronization method according to an embodiment of this application;
FIG. 15A and FIG. 15B are a schematic flowchart of another notification synchronization method according to an embodiment of this application; and
FIG. 16A and FIG. 16B are a schematic flowchart of another notification synchronization method according to an embodiment of this application.

### DESCRIPTION OF EMBODIMENTS

The following describes technical solutions of this application with reference to accompanying drawings. It is clear that the described embodiments are merely a part rather than all of embodiments of this application.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of embodiments of this application, "a plurality of" or "multiple" means two or more than two.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include plural forms such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, the statements "an embodiment", "some embodiments", "another embodiment", "some other embodiments", and the like that appear in different places in this specification do not necessarily mean referring to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

A method provided in embodiments of this application may be applied to an electronic device such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

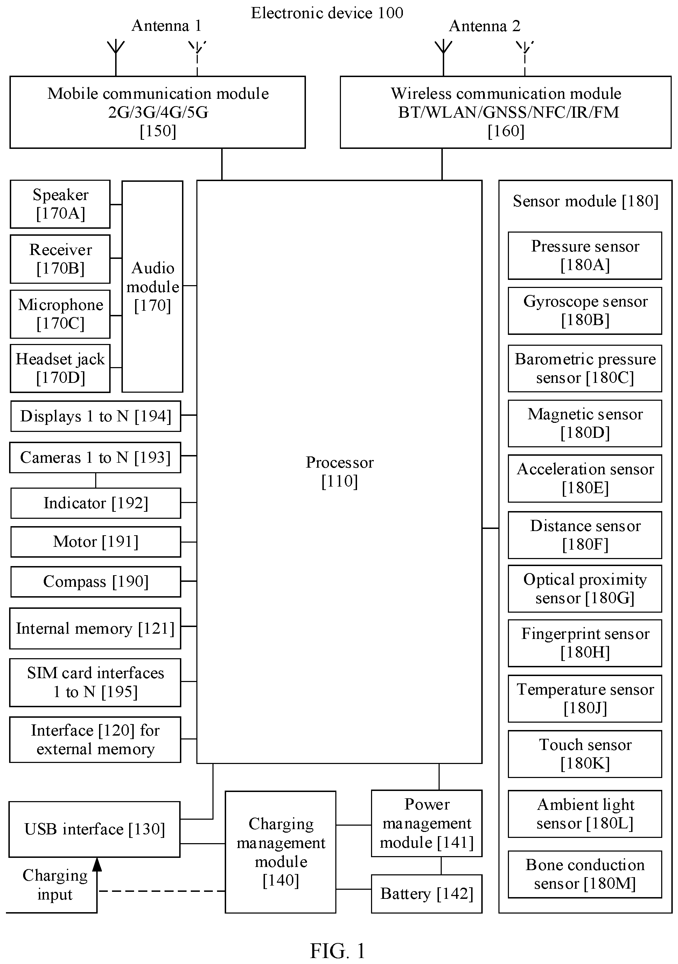

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache. The memory may store an instruction or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio by using the headset. The interface may be further configured to connect to another electronic device such as an AR device.

It may be understood that an interface connection relationship between modules illustrated in this embodiment of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 is coupled to the wireless communication module 160, so that the electronic device 100 can communicate with a network and another device by using a wireless communications technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by drawing on a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external storage card, for example, a micro SD card, to extend a storage capability of the electronic device 100. The external storage card communicates with the processor 110 through the interface 120 for external memory, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an app required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or answer a hands-free call by using the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may alternatively be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as making/answering a call and data communication. In some embodiments, the electronic device 100 uses an embedded SIM (embedded-SIM, eSIM) card, that is, an embedded SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a microservice architecture, or a cloud architecture. In this embodiment of this application, an Android system with a layered architecture is used as an example to describe a software structure of the electronic device 100.

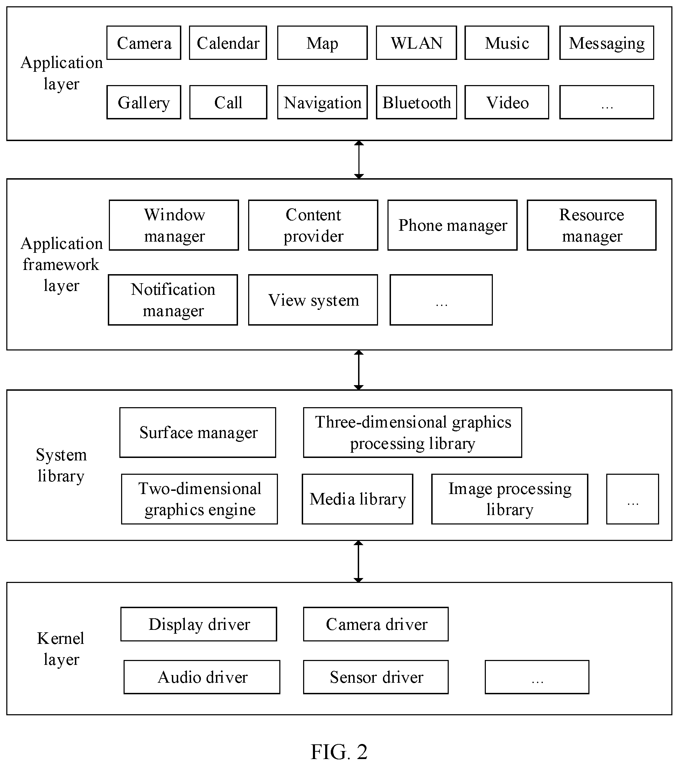

FIG. 2 is a block diagram of the software structure of the electronic device 100 in this embodiment of this application. In the layered architecture, software is divided into several layers, and each layer has a clear role and task. The layers communicate with each other through a software interface. In some embodiments, the Android system is divided into four layers from top to bottom: an application layer, an application framework layer, an Android runtime (Android runtime) and a system library, and a kernel layer. The application layer may include a series of application packages.

As shown in FIG. 2, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification-type message that may automatically disappear after a short pause without requiring user interaction. For example, the notification manager is configured to: notify download completion, provide a message reminder, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is played, the electronic device vibrates, or an indicator light blinks.

The Android runtime includes a core library and a virtual machine. The Android runtime is responsible for scheduling and management of the Android system.

The core library includes two parts: One part is a function that needs to be invoked in a Java language, and the other part is a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

The technical solutions in embodiments of this application may be applied to, for example, an electronic device having a message notification function. For example, the technical solutions may be applied to a television, a desktop computer, a notebook computer, or a vehicle-mounted screen, or may be applied to a portable electronic device such as a mobile phone, a foldable screen, a tablet computer, a camera, a video camera, a video recorder, a watch, or a band, or may be applied to another electronic device having a message notification function, such as a speaker, or may be applied to an electronic device in a 5G network or an electronic device in a future evolved public land mobile network (public land mobile network, PLMN). A main application scenario may be a multi-device message notification management scenario. For example, the technical solutions may be applied to a multi-device message notification management scenario in a Huawei super device.

To more clearly understand the solutions of this application, the following first describes related terms in embodiments of this application.

### 1. Super device

The super device is a distinctive feature of HarmonyOS, and can implement a quick connection and a collaborative operation between a mobile phone and a Huawei device. The super device can automatically discover nearby devices on which a same Huawei account is logged in and that form a super device to create all-scenario collaboration experience. A user can easily control a plurality of systems simultaneously, and do not need to operate the systems one by one, which improves user operation convenience. In other words, the super device is a group of all trusted smart devices for a same individual device. After these devices are close to each other, these devices can be automatically discovered and automatically form networking. Devices in the super device do not need to be authenticated and are connected to each other to complete data exchange, to build all-scenario multi-device smart collaboration experience.

A plurality of smart devices (such as a mobile phone, a watch, a tablet computer, a computer, and a vehicle-mounted screen) can be connected together by using the super device, to implement collaborative management and resource sharing of a plurality of devices. For example, collaboration between two or more devices may be implemented in a "proximity-based connection" manner of the super device.

A message notification function of an electronic device is intended to remind a user of communication information from another person or other real-time information in an application. The user may tap a notification displayed on a screen of the electronic device to start the application, or directly perform a related operation on the notification.

Currently, for a single-device notification scenario, a notification is mainly pushed by a cloud or locally sent by an application. For a cross-device notification scenario, a notification synchronization policy between devices depends on customized scenarios such as a scenario of notification synchronization between a mobile phone and a watch, a scenario of notification synchronization between a mobile phone and an earphone, a multi-screen collaboration scenario, and a multi-device collaboration scenario.

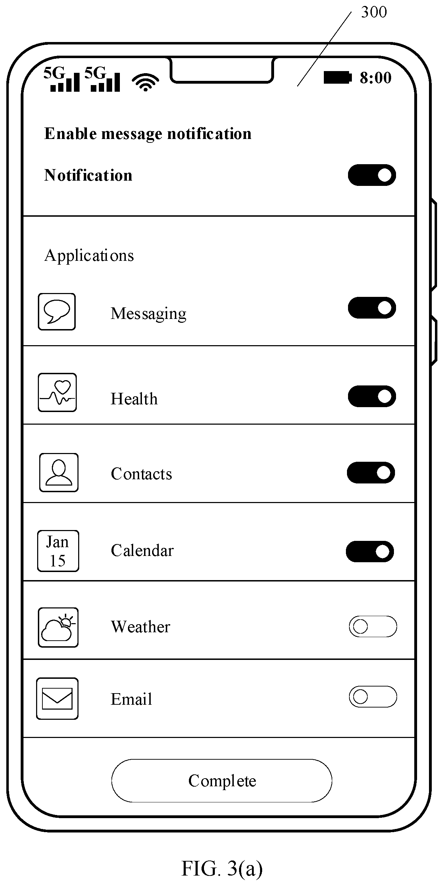

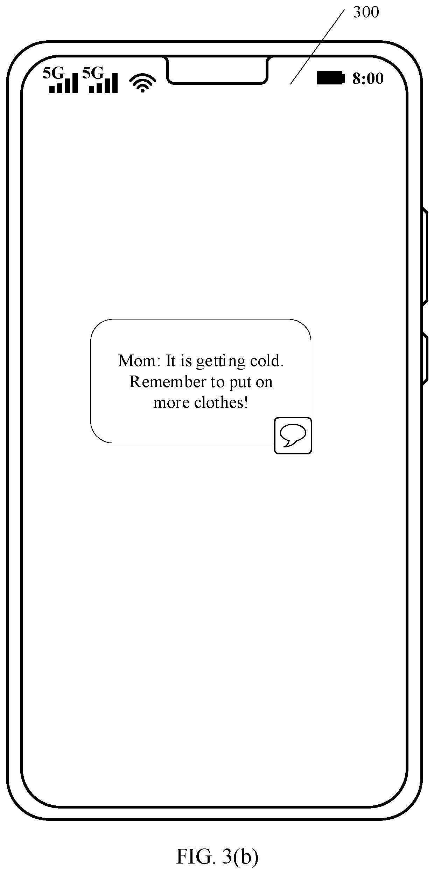

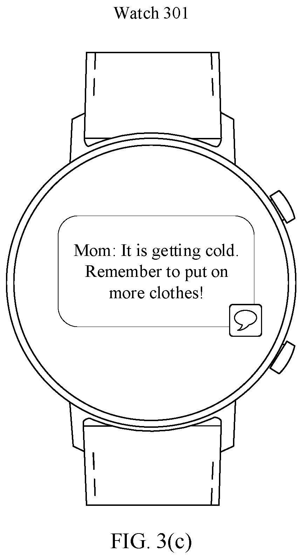

The following describes, with reference to FIG. 3(a), FIG. 3(b), and FIG. 3(c) to FIG. 6, a notification synchronization method implemented depending on the customized scenarios.

FIG. 3(a), FIG. 3(b), and FIG. 3(c) are a diagram of notification synchronization corresponding to the scenario of notification synchronization between a mobile phone and a watch.

As shown in FIG. 3(a), FIG. 3(b), and FIG. 3(c), a mobile phone 300 and a watch 301 may be paired by using a Health app. After pairing is completed, a user may perform notification authorization for the watch 301 on a message notification settings interface of the mobile phone 300 (as shown in FIG. 3(a)). The Health app on the watch 301 subscribes to a system notification on the mobile phone 300 based on a user's authorization status. For example, after the user enables a notification permission of a Messaging application for the watch 301 on the message notification settings interface of the mobile phone 300, when a notification of the Messaging application is displayed on a display of the mobile phone 300, the notification is synchronously displayed on a display of the watch 301 (as shown in FIG. 3(b) and FIG. 3(c)).

In this scenario, notification collaboration management between devices needs to require an independent app for customization and processing. As a result, complexity of notification collaboration between a plurality of devices geometrically increases.

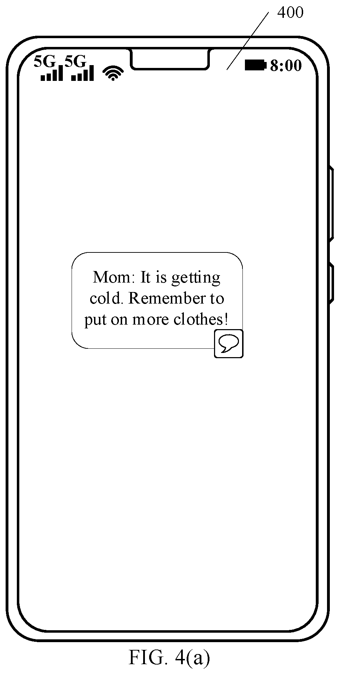

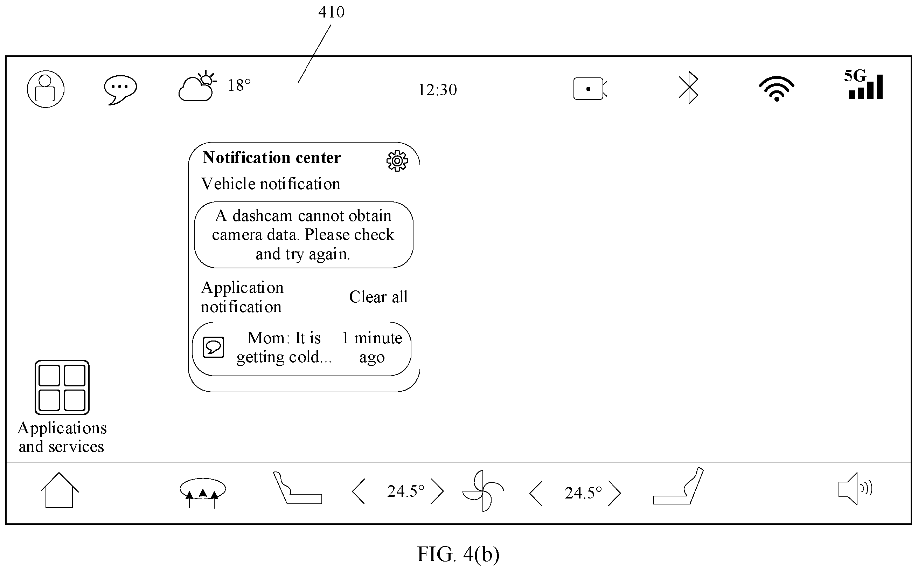

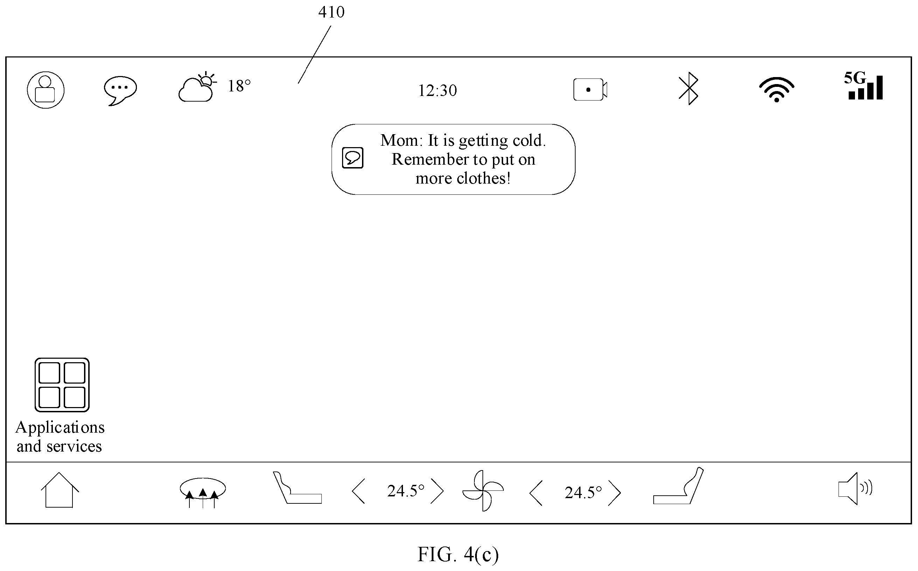

FIG. 4(a), FIG. 4(b), and FIG. 4(c) are a diagram of notification synchronization corresponding to the scenario of notification synchronization between a mobile phone and a cockpit.

As shown in FIG. 4(a), FIG. 4(b), and FIG. 4(c), distributed pairing may be performed between a mobile phone 400 and a vehicle-mounted screen 410 by using a super home screen. After pairing is completed, and a user starts a super home screen application on the vehicle-mounted screen 410, a desktop of the mobile phone 400 reads a notification of the application, and synchronizes the notification to the vehicle-mounted screen 410. For example, after the user starts a Messaging application on the vehicle-mounted screen 410, and a Messaging application of the mobile phone 400 receives a notification, the desktop of the mobile phone 400 reads the notification, and synchronizes the notification to the vehicle-mounted screen 410 (as shown in FIG. 4(a), FIG. 4(b), and FIG. 4(c)). FIG. 4(b) and FIG. 4(c) show two manners of synchronously displaying the notification on the vehicle-mounted screen.

In this scenario, only instant messaging applications such as MeeTime, WeChat, and QQ support notification synchronization.

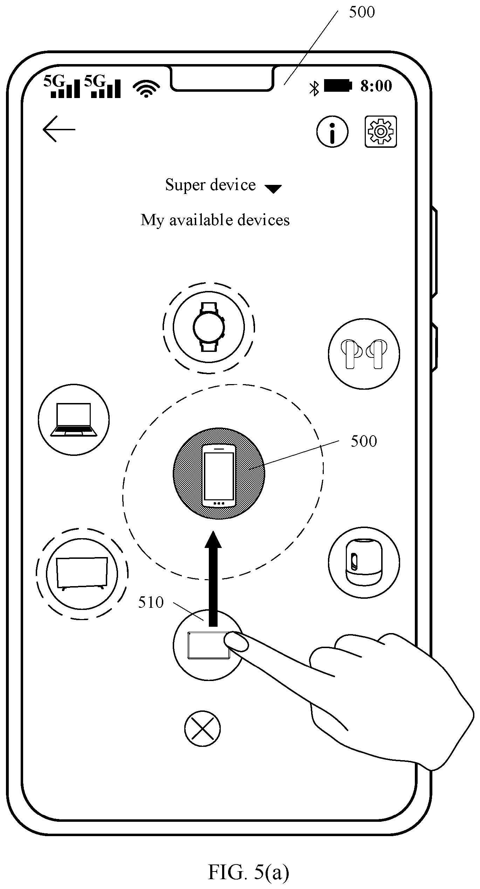

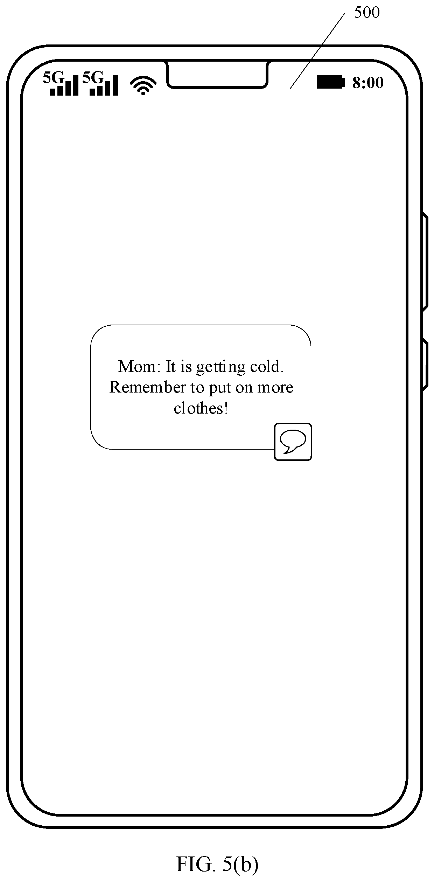

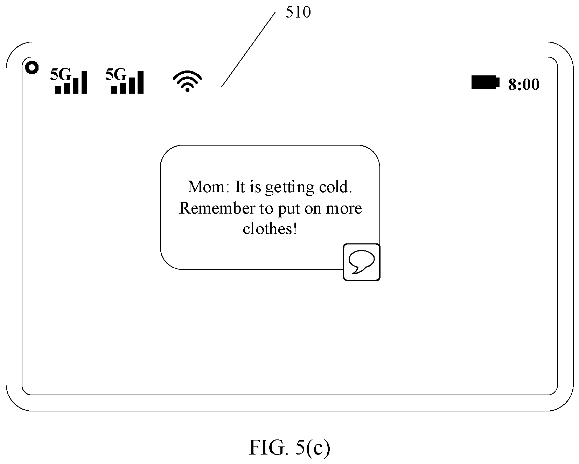

FIG. 5(a), FIG. 5(b), and FIG. 5(c) are a diagram of notification synchronization corresponding to the scenario of notification synchronization between a mobile phone and a tablet computer.

As shown in FIG. 5(a), FIG. 5(b), and FIG. 5(c), a mobile phone 500 and a tablet computer 510 may implement multi-screen collaboration (as shown in FIG. 5(a)) in a form of a super device. After multi-screen collaboration is implemented, a distributed service (PC Assistant) module of the mobile phone 500 subscribes to an instant messaging notification and an SMS message from a notification service of the mobile phone 500. When the mobile phone 500 receives a notification, the notification is transferred to the tablet computer 510 through a soft bus, and is synchronously displayed in a notification center of the tablet computer 510, or is synchronously displayed in a pop-up window on a screen of the tablet computer 510 (as shown in FIG. 5(b) and FIG. 5(c)).

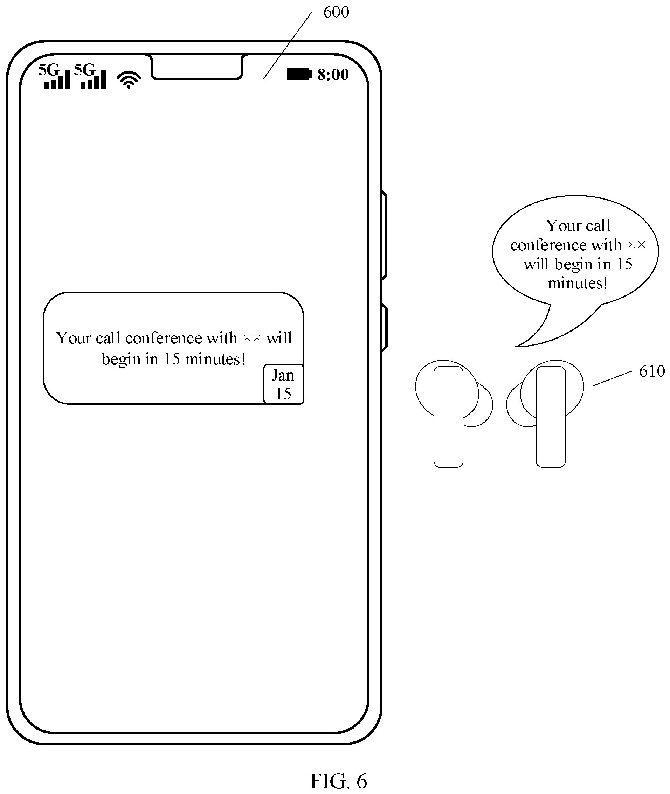

FIG. 6 is a diagram of notification synchronization corresponding to the scenario of notification synchronization between a mobile phone and an earphone.

As shown in FIG. 6, a mobile phone 600 and an earphone 610 may be paired and connected by using Bluetooth. After the connection is completed, an audio product manager of the mobile phone 600 may subscribe to a notification such as a flight or a trip from a notification service of the mobile phone 600. When the notification is displayed on a screen of the mobile phone 600, the earphone 610 synchronously broadcast the notification. The earphone may be replaced with a Bluetooth speaker.

Therefore, in a current multi-device notification synchronization method, a notification synchronization policy between devices depends on customized scenarios. In addition, a notification management rule is monotonous, there is no effective management and control mechanism for notification presentation and reminding, and notifications are numerous and disordered. For example, when a device itself can receive a remote notification from a cloud and receive a local distributed cross-device notification, a notification conflict scenario occurs. Notifications in a device account system and an application account system cannot achieve good collaboration (for example, in a scenario of notification synchronization between a mobile phone and a PC, when device accounts of the mobile phone and PC are the same, a scenario in which application accounts are different exists, which has a privacy leakage risk). When there are more than three devices, it is difficult to implement collaborative reminding of a notification status and system control, which affects user experience in using a plurality of devices.

In view of this, embodiments of this application provide a notification synchronization method and an electronic device. The method can implement unified cross-device collaborative notification management between a plurality of devices, so that notification synchronization between the plurality of devices can be applied to a same notification synchronization policy without depending on the customized scenario. In addition, the method can implement unified distributed scheduling that considers both device-cloud collaboration and device-device collaboration, and can resolve a problem such as "how to avoid a repeated reminder of a same notification" or "how to implement collaborative reminding of a notification status and system control between a plurality of devices", where "device" is a device end, and "cloud" is a cloud end.

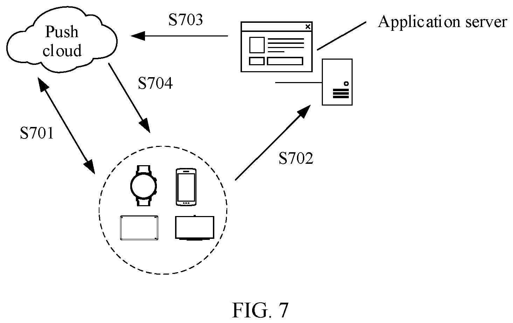

For example, FIG. 7 is a diagram of a scenario according to an embodiment of this application.

As shown in FIG. 7, an applicable scenario of an embodiment of this application is that a plurality of electronic devices implement notification synchronization by using an application server and a push cloud. A synchronization process includes device-cloud synchronization (that is, synchronization between the push cloud and the plurality of electronic devices) and device-device synchronization (that is, synchronization between the plurality of electronic devices). A specific process in which a notification generated by the application server is sent to the device for display is as follows.

S701: A first electronic device requests to register a device identifier with the push cloud. After registration with the push cloud is completed, a first device identifier is returned to the first electronic device. The first device identifier is the device identifier of the first electronic device, and the first electronic device belongs to a plurality of electronic devices on a device side.

The plurality of electronic devices may be a plurality of electronic devices that establish networking by using a super device.

Optionally, the push cloud may also be referred to as a push server.

S702: The first electronic device sends the first device identifier to the application server.

Similarly, a second electronic device that registers a device identifier with the push cloud may also send the device identifier of the second electronic device to the application server.

By analogy, another electronic device that establishes a connection to the push cloud may also register a device identifier and send the registered device identifier to the application server. In this way, the application server can generate a device identifier list.

The application server may be a third-party application server.

S703: After generating a first notification, the application server forwards the first notification and the device identifier list to the push cloud.

S704: After receiving the first notification and the device identifier list, the push cloud sends the first notification to all electronic devices in the device identifier list based on the device identifier list.

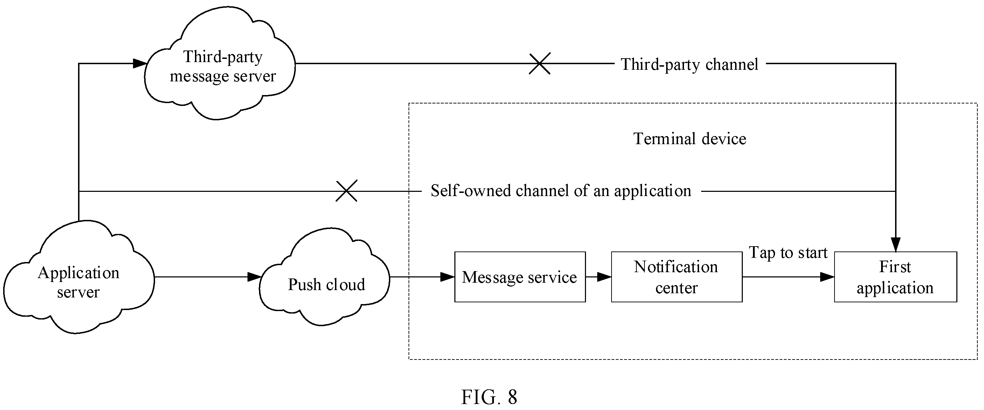

For example, FIG. 8 is a diagram of a notification message sending path according to an embodiment of this application. It can be learned from FIG. 8 that a notification message of a third-party application can be sent only through a push cloud (for example, a vendor's push cloud) channel. A non-vendor remote notification channel (for example, a channel of a third-party message server) is not allowed. In addition, the notification message of the third-party application cannot be sent through a self-owned channel of the application.

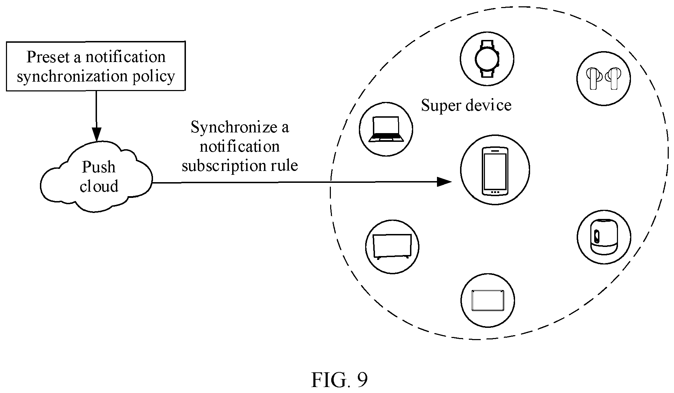

For example, FIG. 9 is a diagram of a cross-device notification subscription method according to an embodiment of this application.

As shown in FIG. 9, a plurality of electronic devices may form networking by using a Huawei super device. The plurality of electronic devices may include, for example, a large-screen device, a tablet computer, a speaker, an earphone, a watch, a notebook computer, and a mobile phone.

A notification synchronization policy may be preset (which may also be described as that a notification synchronization subscription rule is preset) in the push cloud. When a notification synchronization policy on an electronic device side needs to be updated, an electronic device on a device side only needs to synchronize the notification subscription rule from a push cloud side.

In an example, when a new device joins current networking or a device exits the current networking, it is determined that the notification synchronization policy on the electronic device side needs to be updated. In another example, when the notification synchronization policy preset in the push cloud changes, it is determined that the notification synchronization policy on the electronic device side needs to be updated.

In some embodiments, the notification synchronization subscription rule may be determining a corresponding synchronization rule based on a type of a notification. Different types of the notification correspond to different message values, that is, correspond to different importance levels, and corresponding reminder manners are also different.

In an implementation, a notification classification policy is preset in the electronic device. When receiving a notification message, the electronic device classifies the notification based on the notification classification policy, and then determine a notification synchronization manner.

In an example, the notification synchronization subscription rule may be a subscription rule shown in Table 1.

**Table 1**

| Notification type | | Notification value | | Electronic device type | | | | | |
|---|---|---|---|---|---|---|---|---|---|
| | | Importance | Emergency | Watch | Vehicle-mounted screen | Pad | PC | Large screen | Earphone |
| Service | Emergen | Extrem | Extrem | √ | √ | √ | √ | √ | √ |

| Importance | Emergency | Watch | Vehicle-mounted screen | Pad | PC | Large screen | Earph one | | |
|---|---|---|---|---|---|---|---|---|---|
| notifica tion | cy event reminder | ely high | ely high | | | | | | |
| | Incoming call reminder | High | High | √ | √ | Collaboration | Collaboration | Collaboration | √ |
| | Real-time progress reminder | High | High | Authorization required | Authorization required | Collaboration | Collaboration | Collaboration | √ (a trip, a flight, or the like) |
| | Service reminder | High (/Medium) | Medium (/High) | Authorization required | Authorization required | / | / | / | / |
| Session message | Dialog reminder | High (/Medium) | Medium | Authorization required | Authorization required | Collaboration | Collaboration | Collaboration | / |
| | Customer service reminder | Medium | Medium | Authorization required | Authorization required | / | / | / | / |
| Content information | Content information | Low | Low | Authorization required | / | / | / | / | / |
| Marketing activity | Activity promotion | Low | Low | Authorization required | / | / | / | / | / |

The symbol "√" means that a notification message is synchronously reminded as long as the electronic devices are located in same networking.

"Authorization required" means that whether to synchronously remind a notification message is determined based on an authorization setting performed by a user on an application. A Messaging application is used as an example. If the user performs, on the mobile phone end for the watch, notification message authorization in the Messaging application, when the Messaging application on the mobile phone end receives a reminder of a notification, the notification is synchronously reminded on the watch end. For another example, if the user performs, on the mobile phone end for the vehicle-mounted screen, notification message authorization in the Messaging application, when the Messaging application on the mobile phone end receives a reminder of a notification, the notification is synchronously reminded on the vehicle-mounted screen.

"Collaboration" means that when an electronic device (such as a pad, a PC, or a large screen) and a central device (such as a mobile phone) are in a collaboration state, a notification message is synchronously reminded.

In the preceding information, / represents that a notification message is not synchronously reminded.

In an example, the mobile phone, the watch, the pad, and the earphone are located in same networking. After the mobile phone receives a notification message, and the mobile phone determines, based on the preset notification classification policy, that the notification message is the emergency event reminder, the notification message is synchronously reminded on the mobile phone, the watch, the pad, and the earphone.

In another example, the mobile phone, the watch, the pad, and the earphone are located in same networking. After the mobile phone receives a trip notification message, and the mobile phone determines, based on the preset notification classification policy, that the notification message is the real-time progress reminder, the trip notification message is synchronously reminded on the earphone end. If the user enables, to the watch, notification reminder authorization of a trip application on the mobile phone end, the trip notification message is also synchronously reminded on the watch end. If the user enables mobile phone notification message authorization to the vehicle-mounted screen, the trip notification message is also synchronously reminded on the vehicle-mounted screen. If the pad and the mobile phone are in the collaboration state, the trip notification message is also synchronously reminded on the pad.

It can be learned from Table 1 that in a cross-device notification subscription scenario, a unified notification synchronization rule is preset in the cloud, which can implement unified distributed notification management of a plurality of devices.

In some embodiments, when receiving a notification, an electronic device of the plurality of electronic devices stores the notification in a distributed database at a local end. The distributed database at the local end can be synchronized with a distributed database of another electronic device across ends in real time. Based on the distributed database, the notification can be synchronized between trusted devices in the networking.

In some embodiments, the notification synchronization rule may be:
(a) A system notification can be directly forwarded and shared between trusted devices of the super device.
(b) For a notification of an application, cross-device synchronization of the notification needs to meet a related condition. First, user authorization is required. For an on-body device (such as a watch or a cockpit), notification synchronization may be directly implemented after user authorization. For an electronic device (such as an earphone, a speaker, or a display) without an application account, an independent system module is needed to perform synchronization control. For an electronic device (such as a PC, a pad, or a large screen) with an independent application account, the notification can be synchronized on the device side only when the electronic device is in the collaboration state.

In some embodiments, the notification synchronization rule may further include a notification deduplication rule. In an example, the notification deduplication rule may be embodied as follows:

When the on-body device (such as a watch or a cockpit) is independently connected to a network, the body-on device may receive a same message of a third-party application sent by another electronic device and the push cloud. In this embodiment of this application, a message identifier received by a device includes a device identifier list and a notification identifier. When processing the received message, a notification service module of the device may obtain the notification identifier in the message through parsing. If a message corresponding to the notification identifier has ever been received, the user is no longer repeatedly reminded.

In some embodiments, the notification synchronization rule may further include a notification setting information synchronization rule. In an example, the notification setting information synchronization rule may be embodied as follows:

When a user enables or disables an application notification setting on any one of a plurality of devices, the setting is automatically stored in a distributed database. In this way, the setting can be automatically synchronized to another device of the plurality devices. The notification setting may include, for example, a ringtone setting, a vibration setting, and the like.

In some embodiments, the notification synchronization rule may further include a notification status information synchronization rule. In an example, the notification status information synchronization rule may be embodied as follows:

After a notification is synchronized to a plurality of electronic devices, if a user reads the notification on any one of the plurality of electronic devices, a status (read) of the notification is automatically stored in a distributed database. In this way, the status of the notification can be synchronized between the plurality of electronic devices based on the distributed database, and then the notification can be synchronously canceled on another electronic device of the plurality of electronic devices.

In some embodiments, the notification synchronization rule may further include a notification reminder rule. In an example, the notification reminder rule may be embodied as follows:

If a mobile phone device is in an unlocked state, the mobile phone gives a reminder. If the mobile phone device is in a locked state and another device is in the unlocked state, the another device gives a reminder, and the mobile phone gives a silent reminder. If the mobile phone and the another device are both in the locked state, a plurality of devices all give reminders.

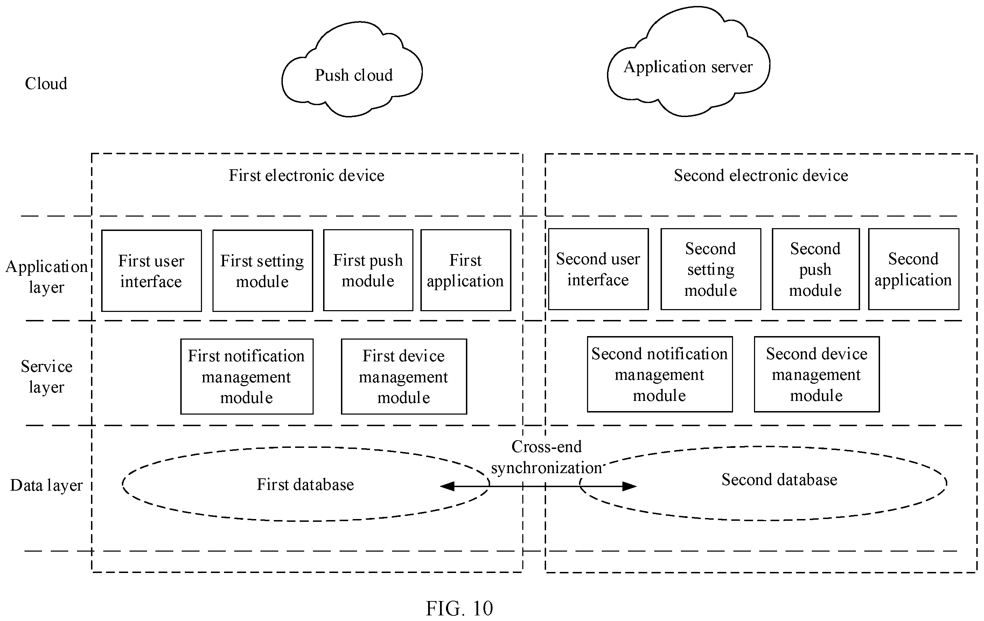

For example, FIG. 10 is a diagram of a system architecture of notification synchronization according to an embodiment of this application.

As shown in FIG. 10, the system includes a push cloud, an application server, a first electronic device, and a second electronic device. A system architecture of the first electronic device includes an application layer, a service layer, and a data layer. The application layer includes a first user interface, a first setting module, a first push module, and a first application. The service layer includes a first notification management module and a first device management module. The data layer includes a first database. Similarly, a system architecture of the second electronic device also includes an application layer, a service layer, and a data layer. The application layer includes a second user interface, a second setting module, a second push module, and a second application. The service layer includes a second notification management module and a second device management module. The data layer includes a second database. The first database is synchronized with the second database across ends, so that notification messages of the first electronic device and the second electronic device can be synchronized.

Optionally, the databases may be distributed databases.

The push cloud may be a notification push cloud provided by a device vendor, for example, a Huawei push (push) cloud. The push cloud may be understood as a cloud-side module of a notification service, is responsible for generating a device identifier (for example, a device token) of a device and pushing a notification to a device side, and is responsible for synchronizing a notification subscription rule between devices.

The application server may be a third-party application server, and the third-party application server may be a cloud server constructed by a vendor of a third-party application. The third-party application may interact with a cloud server of the third-party application. Usually, the third-party application exchanges data with the server of the third-party application. After a device identifier is registered, a device side corresponding to the third-party application needs to query a database for a device identifier of a local device via a device management module, and send the device identifier to the third-party application server. In this way, the third-party application combines all received device identifiers into a device identifier list. When the third-party application server sends a notification message to the push cloud, the notification message carries the device identifier list.

For the first user interface, a notification center reminds a user of a notification, presents the notification to the user, and interacts with the user through the first user interface. In addition, the first user interface is configured to write a notification status (for example, a reading status of a notification) after user interaction into the first notification management module. The first notification management module stores the notification status into the first database. Then, the first database synchronizes the notification status to another device, for example, synchronizes the notification status to the second electronic device.

The first setting module is configured to set a notification. After the user completes notification setting, a notification setting is written into the first notification management module. The first notification management module stores the notification setting into the first database. Then, the first database synchronizes the notification setting to another device, for example, synchronizes the notification setting to the second electronic device.

A first push module is configured to perform interaction between the first electronic device and the push cloud. For example, the first push module is configured to request to register a device identifier with the push cloud, and is further configured to receive a first device identifier sent by the push cloud in response to a registration request. The first device identifier is a device identifier of the first electronic device. The first push module is further configured to receive a notification message and a device identifier list sent by the push cloud, and is further configured to store the received notification message in the first database. Then, the first database synchronizes the notification message to another device, for example, synchronizes the notification message to the second electronic device.

The first notification management module is configured to be responsible for lifecycle management of a notification message, including management such as notification message receiving, notification message reminding, notification message deduplication (that is, avoiding a repeated reminder), notification message subscription, storage of notification message setting information, and notification message deletion.

The first device management module is configured to be responsible for processing status information of the first device, for example, is configured to register the device identifier of the first device with the push cloud, is further configured to provide a query interface for the first device identifier, and is further configured to listen to an unlocked state of the first device, and store the unlocked state of the first device into the first database. Then, the first database synchronizes the unlocked state of the first device to another device, for example, synchronizes the unlocked state of the first device to the second electronic device.

The first database is configured to: when data (for example, related data such as setting information of a notification, a reading status of the notification, a locked state of the notification, content of the notification, and device identifier information) in the database changes, synchronize the change to a database of another electronic device.

Similarly, functions of the second user interface, the second setting module, the second push module, the second application, the second notification management module, the second device management module, and the second database that are included in the second electronic device are similar to functions of the first user interface, the first setting module, the first push module, the first application, the first notification management module, the first device management module, and the first database that are included in the first electronic device. For brevity, details are not described herein again.

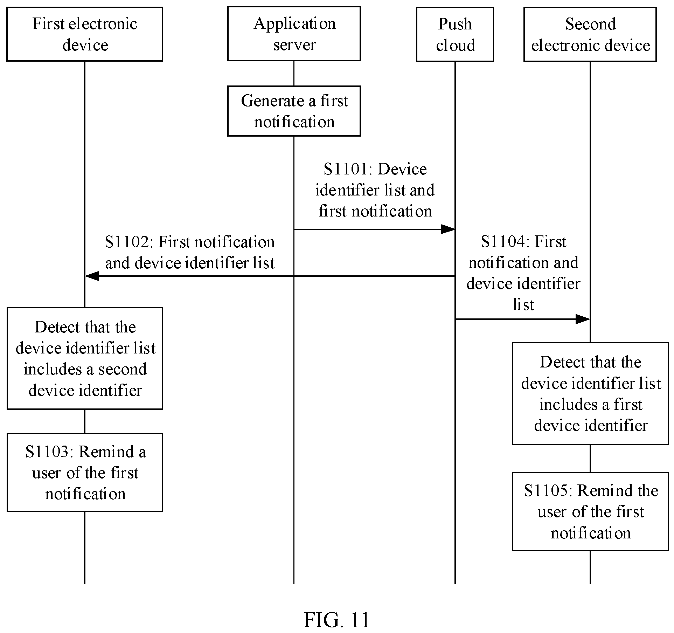

For example, FIG. 11 is a schematic flowchart of a notification synchronization method 1100 according to an embodiment of this application. The method may be applicable to, for example, a scenario in which a first electronic device and a second electronic device are independently connected to a network, and the first electronic device and the second electronic device are in a collaboration state or a non-coordinated state. As shown in FIG. 11, the method 1100 includes the following steps.

S1101: When generating a first notification, an application server sends the first notification and a device identifier list to a push cloud, where the device identifier list includes a first device identifier and a second device identifier, the first device identifier indicates the first electronic device, and the second device identifier indicates the second electronic device.

For example, the first notification may be generated and sent by an application of another device outside the networking.

The device identifier list includes one or more device identifiers. The first device identifier of the one or more device identifiers is used as an example. The first device identifier represents a device identifier of the first electronic device, and the first device identifier is a device identifier that the first electronic device requests to register with the push cloud. After obtaining the first device identifier registered with the push cloud, the first electronic device sends the first device identifier to the application server. Similarly, an explanation of each of the one or more device identifiers is similar to the explanation. For brevity, details are not described herein again.

That an electronic device is independently connected to a network may be understood as that the electronic device registers a device identifier with the push cloud.

S1102: The push cloud sends the first notification and the device identifier list to the first electronic device based on the first device identifier included in the device identifier list.

S1103: The first electronic device reminds a user of the first notification.

In some embodiments, the first electronic device may remind the user of the first notification by displaying the first notification on a screen of the first electronic device. Alternatively, the first electronic device may remind the user of the first notification by sending a voice prompt, a vibration prompt, or the like. This is not limited in this application.

In a scenario, the first electronic device and the second electronic device are in the collaboration state. If detecting that the device identifier list includes the second device identifier, the first electronic device may consider that the second electronic device also receives the first notification sent by the push cloud. In this case, the first electronic device does not forward the first notification to the second electronic device. Similarly, if detecting that the device identifier list includes the first device identifier, the second electronic device may consider that the first electronic device also receives the first notification sent by the push cloud. In this case, the second electronic device does not forward the first notification to the first electronic device.

In another scenario, if the first electronic device and the second electronic device are in the non-collaboration state, notification message synchronization is not performed between the first electronic device and the second electronic device.

S1104: The push cloud sends the first notification and the device identifier list to the second electronic device based on the second device identifier included in the device identifier list.

S1105: The second electronic device reminds the user of the first notification.

In some embodiments, the second electronic device may remind the user of the first notification by displaying the first notification on a screen of the second electronic device. Alternatively, the second electronic device may remind the user of the first notification by sending a voice prompt, a vibration prompt, or the like. This is not limited in this application.

It should be noted that a sequence of performing S1102 and S1103 and that of performing S1104 and S1105 are not limited. For example, S1102 and S1103 may be simultaneously performed, or may be separately performed.

In an embodiment, a manner in which the first electronic device and the second electronic device implement the collaboration state may be that the first electronic device and the second electronic device form networking by using a Huawei super device, or may be that the first electronic device and the second electronic device from networking through mutual authentication, or may be that the first electronic device and the second electronic device form networking in another manner. This is not limited in this application.

In this embodiment of this application, a distributed unified control policy based on device-cloud collaboration and device-device collaboration is provided. After the application server generates a notification message, the notification message sent to the cloud carries the device identifier list. The push cloud separately delivers the notification message to all corresponding devices in the device identifier list. The notification message delivered by the push cloud to the electronic device carries the device identifier list. In this way, after receiving the notification message, the electronic device can determine, based on the device identifier list, which device to which the notification message is sent, and the electronic device can avoid repeatedly forwarding the notification message to another device that has ever received the notification message. This avoids inconvenience caused to a user due to repeated sending of the message notification.

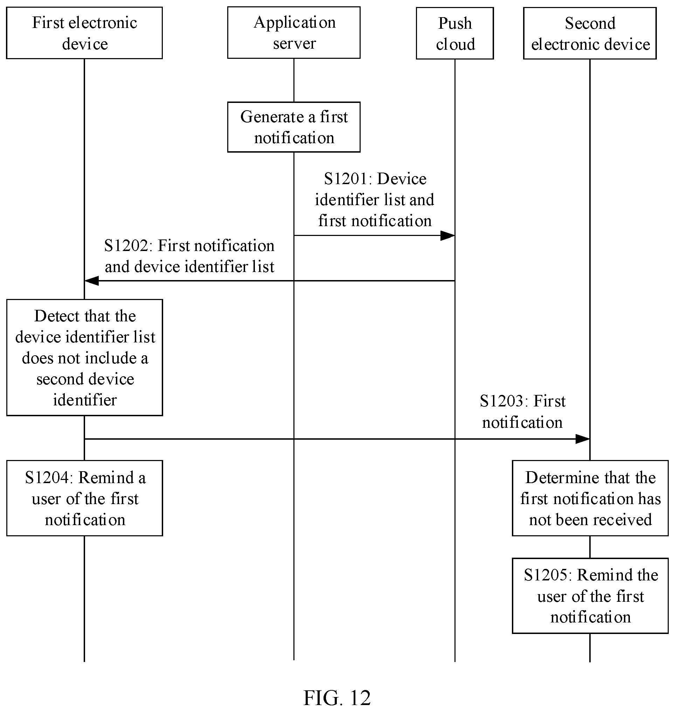

For example, FIG. 12 is a schematic flowchart of another notification synchronization method 1200 according to an embodiment of this application. The method may be applicable to, for example, a scenario in which a first electronic device is independently connected to a network, a second electronic device is not independently connected to a network, and the first electronic device and the second electronic device are in a collaboration state. As shown in FIG. 12, the method 1200 includes the following steps.

S1201: When generating a first notification, an application server sends the first notification and a device identifier list to a push cloud, where the device identifier list includes a first device identifier, and the first device identifier indicates the first electronic device.

S1202: The push cloud sends the first notification and the device identifier list to the first electronic device based on the first device identifier included in the device identifier list.

S1203: If detecting that the device identifier list does not include the second device identifier, the first electronic device may consider that the second electronic device does not receive the first notification sent by the push cloud. In this case, the first electronic device forwards the first notification to the second electronic device.

In some embodiments, a manner in which the first electronic device forwards the first notification to the second electronic device may be as follows: The first electronic device stores the first notification to a first database at a local end, and based on cross-device synchronization between the first database and a second database of the second electronic device and real-time monitoring of a data change in the second database by the second electronic device, the second electronic device can obtain the first notification.

S1204: The first electronic device reminds a user of the first notification.

An explanation of this step is the same as an explanation of S1105. For brevity, details are not described herein again.

S1205: After receiving the first notification, the second electronic device determines whether the first notification has ever been received. If the first notification has ever been received, the user is not reminded of the first notification. If the first notification has not been received, the user is reminded of the first notification.

In some embodiments, after receiving the first notification, the second electronic device obtains an ID of the first notification by parsing the first notification, and then determines, based on the ID of the first notification, whether the first notification has ever been received.

In this embodiment of this application, a distributed unified control policy based on device-cloud collaboration and device-device collaboration is provided. After the application server generates a notification message, the notification message sent to the cloud carries the device identifier list. The push cloud separately delivers the notification message to all corresponding devices in the device identifier list. The notification message delivered by the push cloud to the electronic device carries the device identifier list. In this way, after receiving the notification message, the electronic device can determine, based on the device identifier list, which device to which the notification message is sent, and the electronic device can avoid repeatedly forwarding the notification message to another device that has ever received the notification message. This avoids inconvenience caused to a user due to repeated sending of the message notification. In addition, when receiving the notification message, the electronic device may determine whether the notification message has ever been received. When the notification message has ever been received, a reminder of the notification message is not sent to the user. This further avoids a repeated reminder of the notification message, and improves user experience.

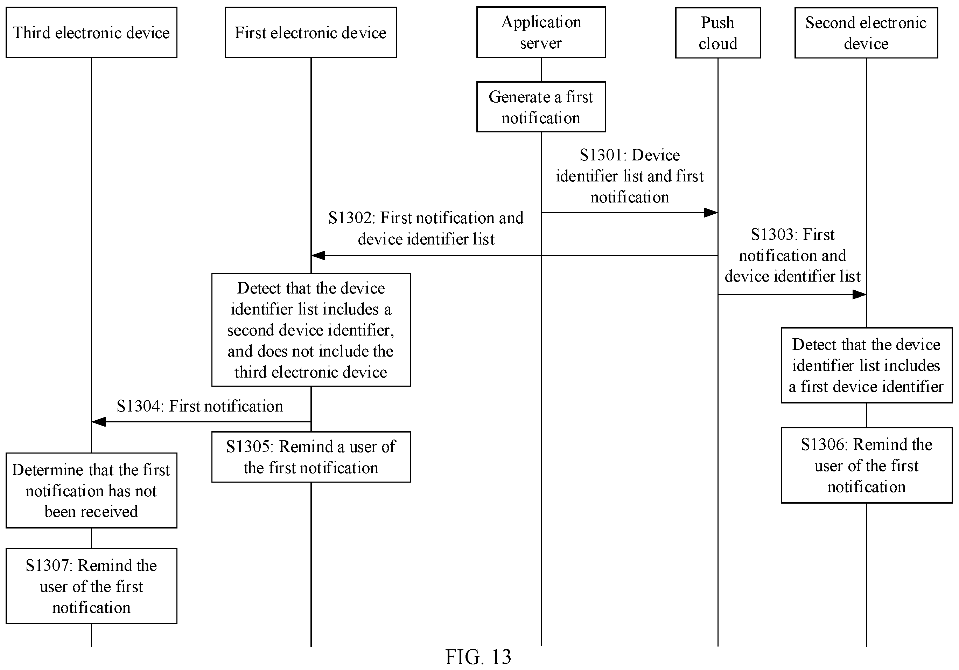

For example, FIG. 13 is a schematic flowchart of another notification synchronization method 1300 according to an embodiment of this application. The method may be applicable to, for example, a scenario in which a first electronic device is independently connected to a network, a second electronic device is independently connected to a network, a third electronic device is not independently connected to a network, the first electronic device, the second electronic device, and the third electronic device are in a collaboration state, and the first electronic device is a central device. As shown in FIG. 13, the method 1300 includes the following steps.

S1301: When generating a first notification, an application server sends the first notification and a device identifier list to a push cloud, where the device identifier list includes a first device identifier and a second device identifier, the first device identifier indicates the first electronic device, and the second device identifier indicates the second electronic device.

For example, the first notification may be generated and sent by an application of another device outside the networking.

S1302: The push cloud sends the first notification and the device identifier list to the first electronic device based on the first device identifier included in the device identifier list.

S1303: Similarly, the push cloud sends the first notification and the device identifier list to the second electronic device based on the second device identifier included in the device identifier list.

S1304: If detecting that the device identifier list includes the second electronic device but does not include the third electronic device, the first electronic device may consider that the second electronic device also receives the first notification sent by the push cloud, and the third electronic device does not receive the first notification sent by the push cloud. In this case, the first electronic device forwards the first notification to the third electronic device.

In some embodiments, a manner in which the first electronic device forwards the first notification to the third electronic device may be as follows: The first electronic device stores the first notification to a first database at a local end, and based on cross-device synchronization between the first database and a third database of the third electronic device and real-time monitoring of a data change in the third database by the third electronic device, the third electronic device can obtain the first notification.

S1305: The first electronic device reminds a user of the first notification.

An explanation of this step is the same as an explanation of S1105. For brevity, details are not described herein again.

S1306: If detecting that the device identifier list includes the first electronic device, the second electronic device may consider that the first electronic device also receives the first notification sent by the push cloud. In this case, the first electronic device does not forward the first notification to the first electronic device, but reminds the user of the first notification.

S1307: After receiving the first notification, the third electronic device determines whether the first notification has ever been received. If the first notification has ever been received, the user is not reminded of the first notification. If the first notification has not been received, the user is reminded of the first notification.

In some embodiments, after receiving the first notification, the third electronic device obtains an ID of the first notification by parsing the first notification, and then determines, based on the ID of the first notification, whether the first notification has ever been received.

In an embodiment, a manner in which the first electronic device, the second electronic device, and the third electronic device implement the collaboration state may be forming networking by using a Huawei super device, or may be forming networking through mutual authentication, or may be forming networking in another manner. This is not limited in this application.

In an example, the first electronic device is the central device (for example, a mobile phone), the second electronic device is a device (for example, a PC) with an independent application account, and the third electronic device is an on-body device (for example, a watch) that is not independently connected to a network. The first electronic device is used as the central device, and the second electronic device and the third electronic device synchronize device status information to the first electronic device, and then the first electronic device synchronizes the device status information to the second electronic device and the third electronic device. For example, after the first notification is received, if one of the devices is in an unlocked state, the device primarily gives a primary reminder of the first notification, and another device gives a silent reminder of the first notification. If the first notification is already read on the second electronic device and the third electronic device, notification reminders on the three devices synchronously disappear. If the notification is first read on the third electronic device, a status of the notification is synchronized to other devices, the notification reminders on the first electronic device and the second electronic device may be retained, and the notification reminder on the third electronic device disappears.

Based on this, if more electronic devices join the networking, a message synchronization principle of an on-body device is the same as a message synchronization principle of the third electronic device, and a message synchronization principle of the device with an independent application account is the same as a message synchronization principle of the second electronic device.

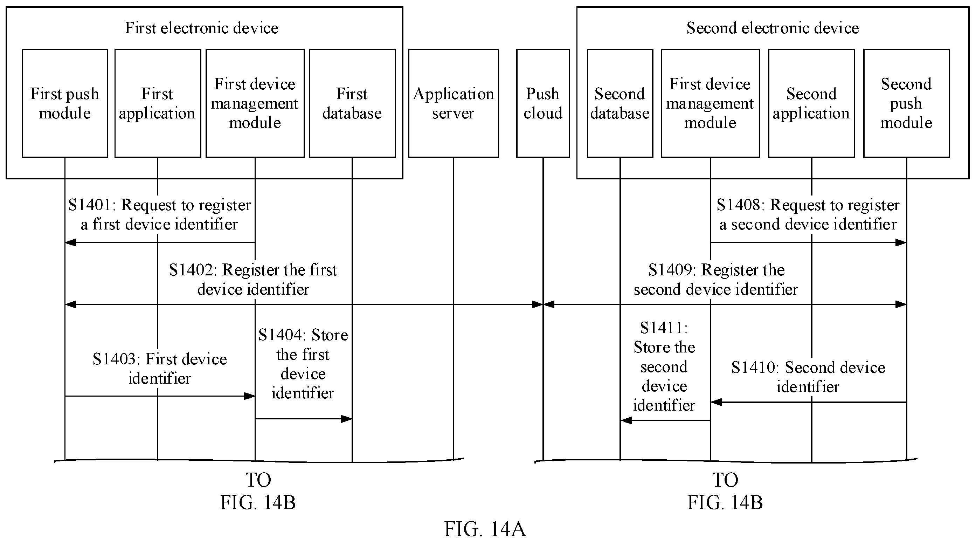

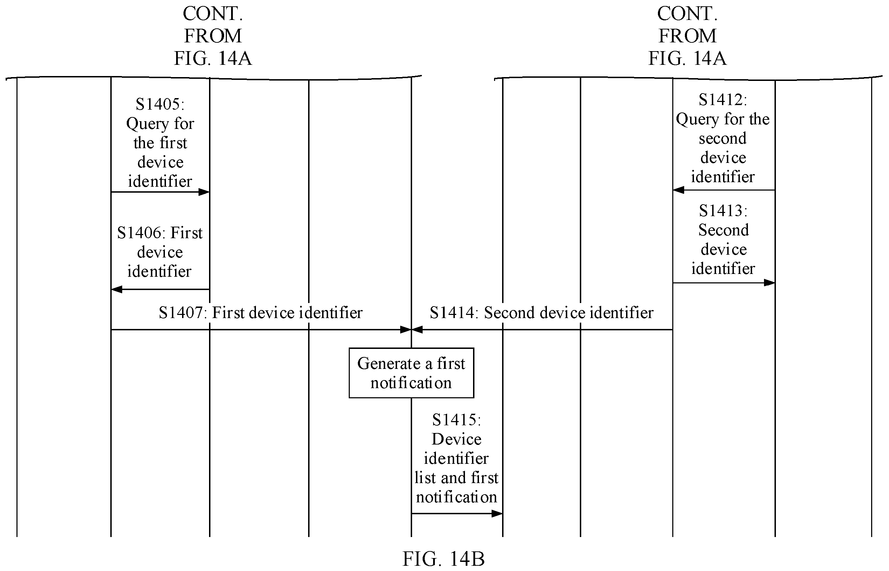

For example, FIG. 14A and FIG. 14B are a schematic flowchart of another notification synchronization method 1400 according to an embodiment of this application. As shown in FIG. 14A and FIG. 14B, the method 1400 includes the following steps.

S1401: A first device management module requests a first push module to register a first device identifier, where the first device identifier is a device identifier of a first electronic device.

In an implementation, the first device management module sends a first request message to the first push module, and the first request message is used to request to register the first device identifier.

S1402: In response to that a registration request message sent by the first device management module is received, the first push module registers the first device identifier with a push cloud.

In an implementation, the process includes the following steps:
The first push module requests to register the first device identifier with the push cloud, or the first push module forwards the first request message to the push cloud;
the push cloud generates the first device identifier corresponding to the first electronic device; and
the push cloud sends the first device identifier to the first push module.

S1403: The first push module sends the first device identifier to the first device management module.

S1404: The first device management module sends the first device identifier to a first database, to store the first device identifier in the first database.

S1405: A first application queries the first database for the first device identifier via the first device management module.

In an implementation, the process includes the following step:
The first application queries the first database for the device identifier of the first electronic device, that is, the first device identifier, through a query interface provided by the first device management module.

S1406: The first device management module sends the first device identifier to the first application.

S1407. The first application sends the first device identifier to an application server.

S1408: A second device management module requests a second push module to register a second device identifier, where the second device identifier is a device identifier of a second electronic device.

In an implementation, the second device management module sends a second request message to the second push module, and the second request message is used to request to register the second device identifier.

S1409: In response to that a registration request message sent by the second device management module is received, the second push module registers the second device identifier with a push cloud.

In an implementation, the process includes the following steps:
The second push module requests to register the second device identifier with the push cloud, or the second push module forwards the second request message to the push cloud;
the push cloud generates the second device identifier corresponding to the second electronic device; and
the push cloud sends the second device identifier to the second push module.

S1410: The second push module sends the second device identifier to the second device management module.

S1411: The second device management module sends the second device identifier to a second database, to store the second device identifier in the second database.

S1412: A second application queries the second database for the second device identifier via the second device management module.

In an implementation, the process includes the following step:
The second application queries for the device identifier of the second electronic device, that is, the second device identifier, through a query interface provided by the second device management module.

S1413: The second device management module sends the second device identifier to the second application.

S1414: The second application sends the second device identifier to the application server.

S1415: When generating a first notification, the application server sends the first notification and a device identifier list to the push cloud.

The device identifier list may include the first device identifier and the second device identifier.

The method in this embodiment of this application may be applicable to, for example, a scenario in which the first electronic device and the second electronic device are both independently connected to a network. When an electronic device is not independently connected to a network, the electronic device does not register a device identifier with the push cloud.

In this embodiment of this application, a notification message sent by the application server to the push cloud carries device identifiers of a plurality of devices served by the application server. In this way, the push cloud can push the notification message to the plurality of devices based on the plurality of device identifiers carried in the notification message. In addition, each of the plurality of devices may further determine, based on the plurality of device identifiers carried in the notification message, which devices to which the notification message has ever been sent. This can avoid repeated synchronization of a same notification message.

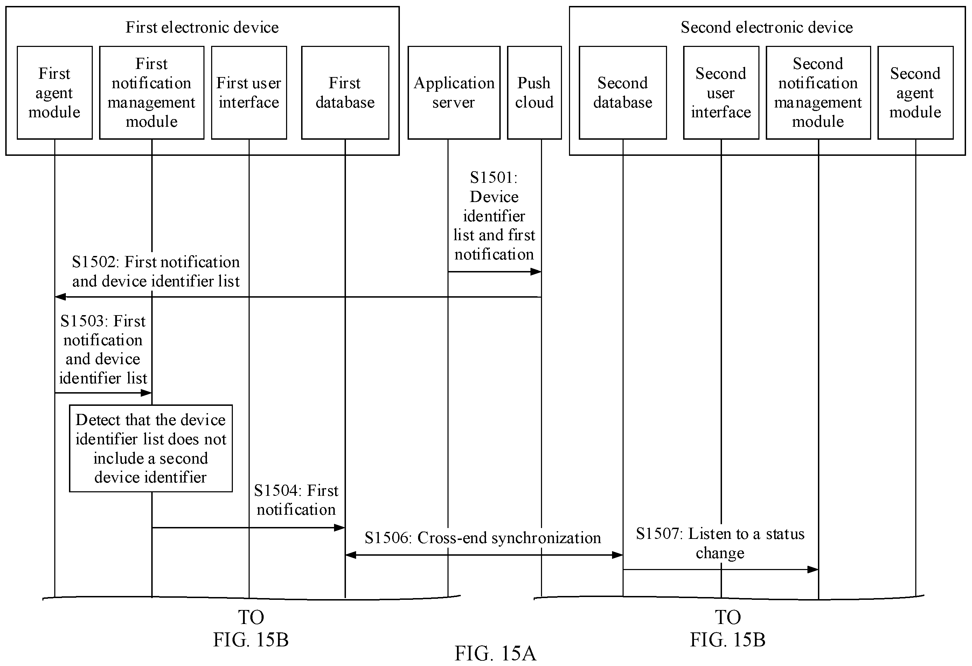

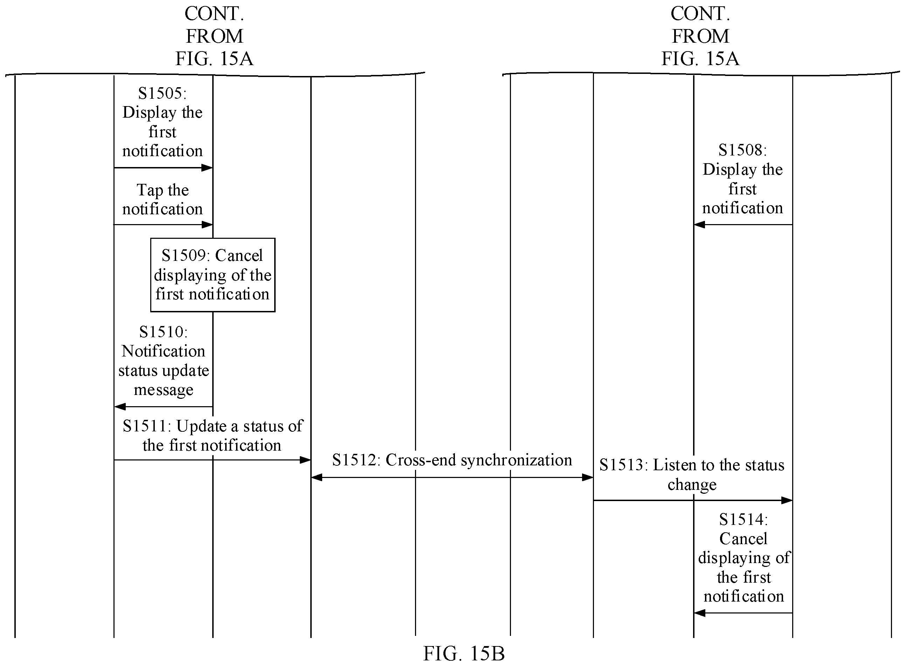

For example, FIG. 15A and FIG. 15B are a schematic flowchart of another notification synchronization method 1500 according to an embodiment of this application. As shown in FIG. 15A and FIG. 15B, the method 1500 includes the following steps.

S1501: An application server sends a first notification and a device identifier list to a push cloud, where the device identifier list includes a first device identifier.

There is a binding relationship between the first notification and the device identifier list. A specific relationship may be, for example, that the first notification carries the device identifier list.

S1502: The push cloud sends the first notification and the device identifier list to a first agent module of the first electronic device based on the first device identifier.

S1503: The first agent module forwards the first notification and the device identifier list to a first notification management module.

S1504: If detecting that the device identifier list does not include a second device identifier, the first notification management module sends the first notification to a first database. That is, the first notification management module stores the first notification into the first database.

S1505: The first notification management module sends the first notification to a first user interface, to display the first notification on the first user interface.

S1506: Synchronize the first database of the first electronic device and a second database of a second electronic device across devices, and synchronize the first notification to the second database.

S1507: A second notification management module of the second electronic device listens to a status change of the second database, and detects through listening that the first notification is newly added to the second database.

S1508: The second notification management module sends the first notification to a second user interface, to display the first notification on the second user interface.

S1509: In response to an operation of tapping the first notification by a user on the first user interface, the first user interface cancels displaying of the first notification on the first user interface.

S1510: The first user interface sends, to the first notification management module, a notification status update message that indicates that a status of the first notification changes to a read state.

S1511: The first notification management module updates the first database, and updates a reading status of the first notification in the first database to the read state.

S1512: Synchronize the first database of the first electronic device and the second database of the second electronic device across devices, and synchronize the reading status of the first notification to the second database.

S1513: The second notification management module of the second electronic device listens to the status change of the second database, and detects through listening that the reading status of the first notification in the second database is updated to the read state.

S1514: The second user interface cancels displaying of the first notification on the second user interface.

In a feasible implementation, the method 1500 is applicable to a scenario in which the first electronic device and the second electronic device are located in same networking, the first electronic device is independently connected to the network, and the second electronic device is not independently connected to the network. In this scenario, the first electronic device may be, for example, a mobile phone, and the second electronic device may be, for example, a watch. The user authorizes, on the mobile phone, synchronous reminding of the first notification on the watch.

In another feasible implementation, the method 1500 is applicable to a scenario in which the first electronic device and the second electronic device are in a collaboration state, the first electronic device and the second electronic device are both independently connected to a network, a device account of the first electronic device is the same as a device account of the second electronic device, but an application account of the first electronic device is different from an application account of the second electronic device. In this scenario, the first electronic device may be, for example, a mobile phone, and the second electronic device may be, for example, a PC. In addition, in this scenario, a type of the first notification may be limited to an emergency notification or a system application notification.

It may be understood that in the foregoing second implementation, because the application account of the first electronic device is different from the application account of the second electronic device, the second electronic device does not receive the first notification sent by the push cloud, but receives the first notification synchronized by the first electronic device through the database. Based on this, if the application account of the second electronic device is switched to be the same as the application account of the first electronic device, the push cloud resends the first notification to the second electronic device. In this case, after receiving the first notification, the second electronic device may obtain an ID of the first notification through parsing, and can determine, based on the ID of the first notification, that the second electronic device has ever received the first notification before. In this case, after receiving the first notification resent by the push cloud, the second electronic device does not send a reminder of the first notification to the user.

In this embodiment of this application, a distributed unified control policy based on device-cloud collaboration and device-device collaboration is provided. For a plurality of electronic devices located in same networking, when receiving a notification message, the device can determine, based on device identifier information carried in a notification message, which device to which the notification message has ever been sent. In this case, the notification message is not forwarded to the device, to prevent the device from receiving a same notification message for a plurality of times, thereby improving user experience. In addition, between the plurality of electronic devices, a notification message, a status (such as a reading status) of the notification message, and a status (such as an unlocked state) of the electronic device can be synchronized across ends through a distributed database. This better implements collaborative message reminding between the plurality of electronic devices. For example, when a notification is read on a device at one end, the notification displayed on the device at the other end synchronously disappears.

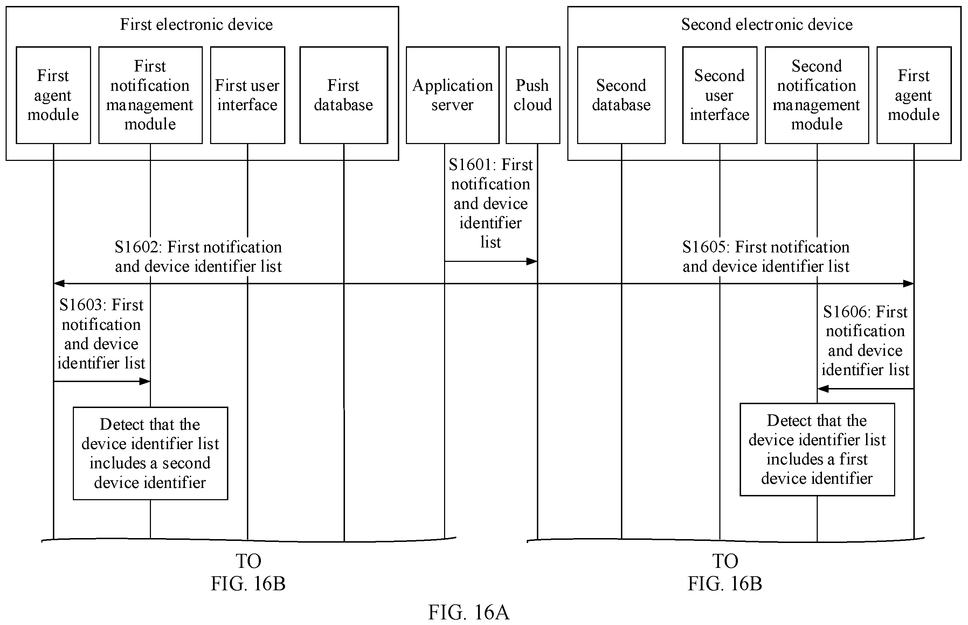

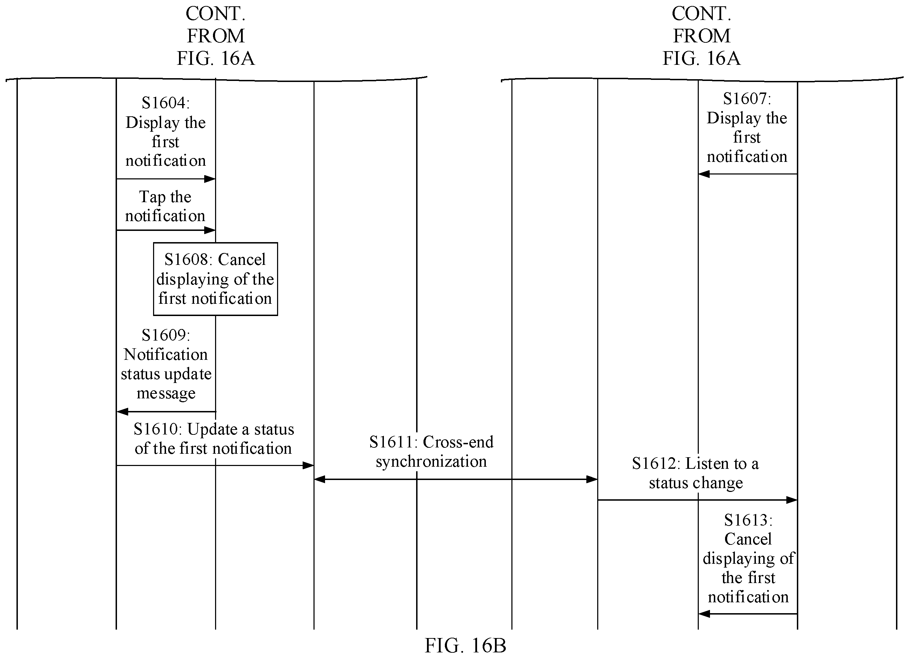

For example, FIG. 16A and FIG. 16B are a schematic flowchart of another notification synchronization method 1600 according to an embodiment of this application. As shown in FIG. 14A and FIG. 14B, the method 1600 includes the following steps.

S1601: An application server sends a first notification and a device identifier list to a push cloud, where the device identifier list includes a first device identifier and a second device identifier.

S1602: The push cloud sends the first notification and the device identifier list to a first agent module of the first electronic device based on the first device identifier.

S1603: The first agent module forwards the first notification and the device identifier list to a first notification management module.

S1604: If detecting that the device identifier list includes the second device identifier, the first notification management module may consider that a second electronic device has ever received the first notification, and does not forward the first notification to the second electronic device. The first electronic device displays the first notification on a screen of the first electronic device.

S1605: The push cloud sends the first notification and the device identifier list to a second agent module of the second electronic device based on the second device identifier.

S1606: The second agent module forwards the first notification and the device identifier list to a second notification management module.

S1607: If detecting that the device identifier list includes the first device identifier, the second notification management module may consider that the first electronic device has ever received the first notification, and does not forward the first notification to the first electronic device. The second electronic device displays the first notification on a screen of the second electronic device.

S1608: In response to an operation of tapping the first notification by a user on a first user interface, the first user interface cancels displaying of the first notification on the first user interface.

S1609: The first user interface sends, to the first notification management module, a notification status update message that indicates that a status of the first notification changes to a read state.

S1610: The first notification management module updates a first database, and updates a reading status of the first notification in the first database to the read state.

S1611: Synchronize the first database of the first electronic device and a second database of the second electronic device across devices, and synchronize the reading status of the first notification to the second database.

S1612: The second notification management module of the second electronic device listens to a status change of the second database, and detects through listening that the reading status of the first notification in the second database is updated to the read state.

S1613: A second user interface cancels displaying of the first notification on the second user interface.

In a feasible implementation, the method 1600 is applicable to a scenario in which the first electronic device and the second electronic device are located in same networking, the first electronic device and the second electronic device may be in a collaboration state, or may be in a non-collaboration state, the first electronic device and the second electronic device are both independently connected to the network, a device account of the first electronic device is the same as that of the second electronic device, and an application account of the first electronic device is the same as that of the second electronic device. In this scenario, the first electronic device may be, for example, a mobile phone, and the second electronic device may be a watch or a PC.

It may be understood that in this implementation, if the first electronic device and the second electronic device are not located in same networking (for example, a super device is not formed), the first electronic device and the second electronic device separately receive the first notification sent by the push cloud and separately process the first notification, and the notification status (reading status and the like) of the first notification is not synchronized. Once the first electronic device and the second electronic device are located in same networking, the notification status is immediately synchronized through cross-end synchronization between the first database of the first electronic device and the second database of the second electronic device.

It should be understood that embodiments of this application are described by using notification message synchronization between two electronic devices. However, this does not constitute any limitation on a scenario to which the solutions in embodiments of this application are applicable. The solutions provided in embodiments of this application may be further applied to a scenario of notification message synchronization between a plurality of electronic devices.

One or more of the modules or units described in this specification may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may include but is not limited to, at least one of the following types: a central processing unit (central processing unit, CPU), a microprocessor, a digital signal processor (DSP), a microcontroller unit (microcontroller unit, MCU), and a compute device used for running software like an artificial intelligence processor. Each compute device may include one or more cores used to execute software instructions to perform an operation or processing. The processor may be built in a SoC (system-on-a-chip) or an application-specific integrated circuit (application-specific integrated circuit, ASIC), or may be an independent semiconductor chip. In addition to the core used to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to perform the foregoing method procedure.

When the modules or units described in this specification are implemented by software, all or some of the modules or units may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A notification synchronization method, wherein the method comprises:
receiving, by a first electronic device, a first notification and a device identifier list that are sent by a push server, wherein a first application is logged in on the first electronic device by using a first account, the device identifier list comprises a device identifier of one or more electronic devices, the first application is logged in on the one or more electronic devices by using the first account, and the first notification is a notification that is of the first application and that corresponds to the first account; and
when the device identifier list does not comprise a device identifier of a second electronic device, synchronizing, by the first electronic device, the first notification to the second electronic device; or
when the device identifier list comprises the device identifier of the second electronic device, skipping synchronizing, by the first electronic device, the first notification to the second electronic device, wherein the second electronic device and the first electronic device are located in same networking.

2. The method according to claim 1, wherein the device identifier list comprises a device identifier of the first electronic device.

3. The method according to claim 1 or 2, wherein synchronizing, by the first electronic device, the first notification to the second electronic device comprises:
synchronizing, by the first electronic device, the first notification to a database of the second electronic device through a database of the first electronic device.

4. The method according to any one of claims 1 to 3, wherein the method further comprises:
determining, by the first electronic device, whether the first notification has ever been received; and
if the first electronic device determines that the first notification has not been received, sending, by the first electronic device, a reminder of the first notification to a user.

5. The method according to any one of claims 1 to 4, wherein before receiving, by the first electronic device, the first notification and the device identifier list that are sent by the push server, the method further comprises:
sending, by the first electronic device, the device identifier of the first electronic device to an application server of the first application, to enable the application server of the first application to send the first notification and the device identifier of the first electronic device to the push server when generating the first notification, wherein the device identifier of the first electronic device is used by the application server to send, to the first electronic device by using the push server, the notification that is of the first application and that corresponds to the first account.

6. The method according to claim 5, wherein before sending, by the first electronic device, the device identifier of the first electronic device to the application server of the first application, the method further comprises:
sending, by the first electronic device, a first request message to the push server, wherein the first request message is used to request to register the device identifier of the first electronic device; and
receiving, by the first electronic device, the device identifier of the first electronic device sent by the push server.

7. The method according to any one of claims 1 to 6, wherein after synchronizing, by the first electronic device, the first notification to the second electronic device, the method further comprises:
when a status of the first notification changes, synchronizing, by the first electronic device, the status of the first notification to the second electronic device.

8. The method according to claim 7, wherein synchronizing, by the first electronic device, the status of the first notification to the second electronic device comprises:
updating, by the first electronic device, the status of the first notification to the database of the first electronic device, wherein the database of the first electronic device is synchronized with the database of the second electronic device across ends.

9. A notification synchronization method, wherein the method comprises:
receiving, by a push server, a first notification and a device identifier list that are sent by an application server of a first application, wherein the device identifier list comprises a device identifier of one or more electronic devices on which the first application is logged in by using a first account, the device identifier list comprises a device identifier of a first electronic device, and the first notification is a notification that is of the first application and that corresponds to the first account; and
sending, by the push server, the first notification and a first device identifier list to the first electronic device based on the device identifier of the first electronic device, wherein
the first device identifier list is the same as the device identifier list, or the first device identifier list comprises all device identifiers in the device identifier list except the device identifier of the first electronic device.

10. The method according to claim 9, wherein when the device identifier list comprises a device identifier of a second electronic device, the method further comprises:
sending, by the push server, the first notification and a second device identifier list to the second electronic device based on the device identifier of the second electronic device, wherein
the second device identifier list is the same as the device identifier list, or the second device identifier list comprises all device identifiers in the device identifier list except the device identifier of the second electronic device.

11. The method according to claim 9 or 10, wherein before receiving, by the push server, the first notification and the device identifier list that are sent by the application server of the first application, the method further comprises:
receiving, by the push server, a first request message sent by the first electronic device, wherein the first request message is used to request to register the device identifier of the first electronic device; and
sending, by the push server, the device identifier of the first electronic device to the first electronic device, to enable the first electronic device to send the device identifier of the first electronic device to the application server of the first application, and further enable the application server of the first application to send the first notification and the device identifier of the first electronic device to the push server when generating the first notification.

12. A notification synchronization method, wherein the method comprises:
after a first notification is generated, sending, by an application server of a first application, the first notification and a device identifier list to a push server, wherein the device identifier list comprises a device identifier of one or more electronic devices on which the first application is logged in by using a first account, the device identifier list is used by the push server to send the first notification and the device identifier list to the one or more electronic devices, and the first notification is a notification that is of the first application and that corresponds to the first account.

13. The method according to claim 12, wherein when the device identifier list comprises a device identifier of a first electronic device, before sending the first notification and the device identifier list to the push server, the method further comprises:
receiving, by the application server of the first application, the device identifier of the first electronic device sent by the first electronic device.

14. The method according to claim 12 or 13, wherein when the device identifier list comprises a device identifier of a second electronic device, before sending the first notification and the device identifier list to the push server, the method further comprises:
receiving, by the application server of the first application, the device identifier of the second electronic device sent by the second electronic device.

15. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 8, or perform the method according to any one of claims 9 to 11, or perform the method according to any one of claims 12 to 14.

16. A system, wherein the system comprises one or more first electronic devices, a push server, and an application server, the first electronic device is configured to perform the method according to any one of claims 1 to 8, the push server is configured to perform the method according to any one of claims 9 to 11, and the application server is configured to perform the method according to any one of claims 12 to 14.

17. A computer-readable storage medium, wherein the storage medium stores a program or instructions, and when the program or the instructions are run, the method according to any one of claims 1 to 8 is implemented, or the method according to any one of claims 9 to 11 is implemented, or the method according to any one of claims 12 to 14 is implemented.

18. A chip, wherein the chip stores instructions, and when the instructions are run, the method according to any one of claims 1 to 8 is implemented, or the method according to any one of claims 9 to 11 is implemented, or the method according to any one of claims 12 to 14 is implemented.
